# EUROPÄISCHE PATENTSCHRIFT

(11) **EP 1 966 656 B1**
(45) Veröffentlichungstag und Bekanntmachung des Hinweises auf die Patenterteilung: **05.01.2011**
(21) Anmeldenummer: 06819698.9
(22) Anmeldetag: 23.11.2006
(51) Int. Cl.: G05B 19/042

(54) **VERFAHREN ZUM ANSTEUERN EINER MODULAR AUS GERÄTEN UND BAUGRUPPEN BESTEHENDEN PRODUKTIONSMASCHINE**
METHOD FOR CONTROLLING A MODULAR PRODUCTION MACHINE CONSISTING OF APPLIANCES AND COMPONENTS
PROCEDE DE COMMANDE D'UNE MACHINE DE PRODUCTION MODULAIRE COMPOSEE D'APPAREILS ET DE COMPOSANTS

(30) Priorität: 28.12.2005 DE 102005062811
(43) Veröffentlichungstag der Anmeldung: 10.09.2008
(73) Patentinhaber: SIEMENS AKTIENGESELLSCHAFT, 80333 München (DE)
(72) Erfinder: BERTRAND, Eduardo, 91056 Erlangen (DE); HERTINGER, Klaus, 91056 Erlangen (DE); KIESEL, Martin, 91099 Poxdorf (DE)
(86) Internationale Anmeldenummer: PCT/EP2006/068799
(87) Internationale Veröffentlichungsnummer: WO 2007/077055

(56) Entgegenhaltungen:
- EP-A- 1 061 423
- DE-A1- 10 101 745
- DE-A1- 19 959 245
- US-B1- 6 449 624
- HILDING ELMQVIST: "A UNIFORM ARCHITECTURE FOR DISTRIBUTED AUTOMATION" ADVANCES IN INSTRUMENTATION AND CONTROL, INSTRUMENT SOCIETY OF AMERICA, RESEARCH TRIANGLE PARK, US, Bd. 46, Nr. PART 2, Januar 1991 (1991-01), Seiten 1599-1608, XP000347589 ISSN: 1054-0032

## Beschreibung

Die Erfindung betrifft ein Verfahren zum Ansteuern einer modular aus Geräten und Baugruppen bestehenden Produktionsmaschine, bei dem in einem Engineering-System eine Geräte- und Baugruppenanordnung festgelegt wird, welche ein Projekt bildet und wobei in dem Projekt bestimmten Anordnungsorten zumindest ein Maschinenobjekt mit Steuerungsinformationen für jeweils ein Gerät oder eine Baugruppe zugeordnet wird, und wobei das Projekt einer Steuerung zugeführt wird, die aufgrund der Maschinenobjekte eine dem Projekt mit den Maschinenobjekten entsprechenden Produktionsmaschine ansteuern kann. Es handelt sich somit um die herkömmliche Verwendung eines Engineering-Systems mit zugehöriger Steuerung (Runtime-System) unter Verwendung von Projekten.

Dokument EP-A-1 061 423 beschreibt ein System zum Bilden eines Projekts für die Ansteuerung einer modular aus Geräten und Baugruppen bestehenden Produktionsmaschine.

Im Rahmen der obigen Begrifflichkeiten ist unter "Anordnungsort" zu verstehen, dass die Anordnung eine Reihenfolge impliziert, wobei der Ort die jeweilige Stelle der Reihenfolge wiedergibt. Die Reihenfolge muss nicht ihren Widerpart in der Produktionsmaschine haben, sondern es kann sich um eine spezifisch die Steuerseite betreffende Reihung von Maschinenobjekten handeln, der eine kompliziertere Anordnung von den tatsächlichen Geräten und Baugruppen gegenübersteht als eine lineare Anordnung. Herkömmlicherweise werden die Steckplätze für Schnittstellen verwendet, die durchnummeriert werden können; die Anordnung kann dann die Reihenfolge der Steckplätze widerspiegeln, wodurch der obige "Anordnungsort" definiert ist.

Die Automatisierung von Produktionsmaschinen, die nach dem Baukastenprinzip zusammengestellt werden, ist mit unterschiedlichen Schwierigkeiten verbunden.

Es wird der Maximalausbau eines Maschinentyps definiert mit einer Grundausführungsform, mit additiv zum Einsatz kommenden Maschinenobjekten und ersatzweise zum Einsatz kommenden Maschinenobjekten.

In der Realität muss immer ein Kompromiss gefunden werden zwischen der Projektierung von unterschiedlichen Möglichkeiten, die der modulare Serienaufbau einer Produktionsmaschine bietet, und der begrenzten Möglichkeit, eine Vielzahl von Daten zu verwalten.

Ein bisher verfolgter Ansatz geht davon aus, dass ein fiktiver Maximalausbau projektiert wird, der alle Ausführungsvarianten umfasst. Dieser fiktive Maximalausbau hat die Schwäche, dass die Ressourcen schlecht genutzt werden. Beispielsweise ist der Speicher mit zahllosen Daten überlastet, die gar nicht benötigt werden. Es werden Daten über Feldbusse übermittelt, welche zu groß ausgelegt sind, da immer die Daten für den gesamten fiktiven Maximalausbau der Ausgangspunkt sind, auch wenn diese im Detail gar nicht alle verwendet werden.

Es wird auch nur unzureichend erfasst, dass manche Maschinenobjekte durch andere Maschinenobjekte ersetzt werden können. Im Rahmen des fiktiven Maximalausbaus sind eher additive Maschinenobjekte im Rahmen des Ausbaus als Optionen handhabbar. Der fiktive Maximalausbau findet seine Schwächen dann, wenn im Alltag im Rahmen von Maschinenumbauten häufig Maschinenobjekte auszutauschen sind.

Es wurde im Stand der Technik auch der Ansatz verfolgt, alternative Projektvarianten vorzuhalten und je nach Ausbaugrad alternative Projekte zu verwenden. Es hat sich herausgestellt, dass diese Vorgehensweise den Nachteil hat, dass Versionen und Varianten sehr schwer gepflegt werden können, da in den verschiedenen Projekten Gleichteile vorkommen. Ändert sich etwas in einem bestimmten Maschinenobjekt, muss theoretisch eine Vielzahl von Projekten geändert werden.

Man ist schließlich auch dazu übergegangen, Varianten außerhalb der Engineering-Tools durch gesonderte Software-Tools zu behandeln, wobei Außensteuerschnittstellen der Engineering-Tools bei entsprechenden Ansteuerungen eine Rolle spielen. Bei dieser Variante muss das Engineering-System an der Maschine immer verfügbar sein. Diese Systemlösungen sind daher kostenträchtig.

Es ist Aufgabe der Erfindung, die Projektierung dahingehend weiter zu entwickeln, dass insbesondere Konfigurationsvarianten leichter ansteuerbar werden, bei denen lediglich einzelne Maschinenobjekte ersetzt sind.

Die Aufgabe wird durch ein Verfahren nach Anspruch 1, ein Engineering-System nach Patentanspruch 5 und ein Runtime-System nach Patentanspruch 6 gelöst.

Erfindungsgemäß werden in dem Engineering-System also an zumindest einem Anordnungsort in dem Projekt mehrere unterschiedliche Maschinenobjekte zugeordnet, so dass die Steuerung mit Hilfe des Projekts Produktionsmaschinen ansteuern kann, in denen an einem diesem Anordnungsort entsprechenden Aufstellungsort wahlweise ein/eine einem der unterschiedlichen Maschinenobjekte entsprechendes/entsprechende Gerät/Baugruppe verwendet ist.

Durch die Erfindung gewinnt der Begriff des Projekts also eine neue Bedeutung. Ein Projekt ist nicht mehr eine feststehende Anordnung von Geräten und Baugruppen, sondern eine Anordnung, an deren Anordnungsorte einzelne Maschinenobjekte variabel eingeordnet werden können. Anordnungsorte können realen Steckplätzen in einem Baugruppenträger entsprechen oder Komponenten in einem Automatisierungsnetzwerk. Von dem Prinzip, dass im Rahmen des Engineering-Systems als Projekt eine Geräte-/ Baugruppenanordnung festgelegt wird, wird zwar nicht abgegangen. Der Benutzer kann nach wie vor auf einer Benutzeroberfläche grafische Objekte verschieben, um sie in eine bestimmte Anordnung zu bringen. Die Benutzeroberfläche sieht aber als zusätzliche Möglichkeit vor, mehrere grafische Objekte an denselben Anordnungsort zu bringen, d. h. einen Steckplatz nicht eindeutig mit einem bestimmten Gerät oder einen bestimmten Baugruppe zu belegen, sondern es ist eine Wahl zwischen unterschiedlichen Geräten und/oder Baugruppen an einem bestimmten Steckplatz ermöglicht.

Bei einer bevorzugten Ausführungsform der Erfindung werden den Maschinenobjekten an zumindest einem Anordnungsort Attribute zugeordnet, welche die Rolle der Maschinenobjekte in dem Projekt widerspiegeln und/oder welche die Beziehung der zugeordneten Geräte und Baugruppen zu Geräten und Baugruppen an einem anderen Anordnungsort widerspiegeln.

Bei der einen Variante können die Attribute festlegen, ob es sich bei den Maschinenobjekten um Maschinenobjekte einer Grundausführung handelt, oder ob es additive Maschinenmodule sind, die von den Objekten repräsentiert werden. Die Erfindung erleichtert durch die Verwendung der Attribute somit die Verwaltung von additiven Maschinenmodulen, die gar nicht unbedingt besetzt sein müssen. Bei der zweiten Variante können mit Hilfe der Attribute Konsistenzregeln für zulässige Konfiguration hinterlegt werden. Beispielsweise kann es möglich sein, dass das Vorhandensein eines bestimmten Geräts oder eine bestimmten Baugruppe an einem Anordnungsort ausschließt, dass ein bestimmtes, an sich wahlweise vorhandenes Gerät oder eine wahlweise vorhandene Baugruppe ausgewählt wird. Die Attribute können diesbezüglich festlegen, welche Kombinationen in tatsächlichen Anordnungen real möglich sind und welche zulässig sind. Das wahlweise Bereitstellen mehrerer Maschinenobjekte an verschiedenen Anordnungsorten des Projekts erlaubt theoretisch eine solche Vielzahl von Möglichkeiten, dass es sich von selbst versteht, dass nicht die gesamte Vielzahl von entsprechenden Kombinationen der Module (Geräte und Baugruppen) in der Realität möglich bzw. zulässig ist.

Bevorzugt werden (mit den Attributen) Handlungsanweisungen, die von der Steuerung ausgebbar sind, in dem Projekt gespeichert. Handlungsanweisungen sind Anweisungen an den Benutzer, die dieser insbesondere beim Umgang mit den additiven Maschinenobjekten und den ersetzenden Maschinenobjekten zu beachten hat. Dies gilt beim Aufbau der modularen Produktionsmaschinen, wenn mit Hilfe des Steuerungssystems geprüft wird, ob dieser den durch das Projekt ermöglichten Konfigurationen entspricht, und dies gilt beim Anschluss des Steuerungssystems, auf dem das Projekt verwendet wird, an eine reale Produktionsmaschine, wenn Projekt und Produktionsmaschine noch aufeinander abgestimmt werden müssen. Die Handlungsanweisungen können beispielsweise auch umfassen, dass von dem Bediener abgefragt wird, welche Geräte angeschlossen sind, damit die Steuerung (das Runtime-System) aus den alternativen Maschinenobjekten in dem Projekt an den verschiedenen Anordnungsorten bestimmte Maschinenobjekte auswählen kann.

Bei einer bevorzugten Ausführungsform überprüft die Steuerung bei Anschluss an eine Produktionsmaschine, ob die Geräte und Baugruppen der Produktionsmaschine in ihrer Gesamtheit mit Hilfe des Projekts ansteuerbar sind. Zu dieser Überprüfung kann beispielsweise auch die Konsistenzüberprüfung gehören, ob es sich um eine zulässige Konfiguration handelt, welche durch die Varianten der Maschinenobjekte an den Anordnungsorten in dem Projekt einerseits ermöglicht ist und andererseits durch Attribute als erlaubt gilt.

Bei der bevorzugen Ausführungsform ist von einer bereits aufgebauten Produktionsmaschine ausgegangen. Die Steuerung kann auch interaktiv wirken, wenn die Produktionsmaschine erst aufgebaut wird, und hierbei beispielsweise einer Bedienperson Informationen betreffend mögliche Konfigurationen, was die noch aufzubauenden Geräteteile und Baugruppen betrifft, ausgeben. Die Erfindung betrifft, wie oben erwähnt, auch ein Engineering -System zum Bilden eines Projekts für die Ansteuerung einer modular aus Geräten und Baugruppen bestehenden Produktionsmaschine, wobei das Projekt als Geräte- und Baugruppenanordnung gebildet ist, an deren Anordnungsorten zumindest ein Maschinenobjekt mit Steuerungsanordnungen für jeweils ein Gerät oder eine Baugruppe zugeordnet wird, das dadurch gekennzeichnet ist, dass zumindest einem Anordnungsort eine Mehrzahl von Maschinenobjekten zugeordnet ist. Mit anderen Worten betrifft die Erfindung auch ein Engineering-System, wie es bei dem erfindungsgemäßen Verfahren eingesetzt wird, d.h. das die Verwendung von den genannten neuartigen Projekten mit einer Mehrzahl von Maschinenobjekten pro Anordnungsort erlaubt. Die Neuartigkeit kann in der Programmierung des Engineering-Systems bei Verwendung bekannter Bauteile bestehen, d.h. in einem neuartigen Computerprogramm, das zur Programmierung eines Engineering-Systems ausgelegt ist, und das entsprechend Projekte verwalten kann, an deren Anordnungsorten eine Mehrzahl von Maschinenobjekten vorgesehen ist.

Die Erfindung betrifft auch ein Steuerungssystem (Runtime-System), das aus einem Projekt Steuerbefehle für die Ansteuerung einer modular aus Geräten und Baugruppen bestehenden Produktionsmaschine gewinnt, und das dadurch gekennzeichnet ist, dass es zur Verwendung von Projekten ausgelegt ist, die als Geräte- und Baugruppenanordnung definiert sind, wobei zumindest einem Anordnungsort eine Mehrzahl von Maschinenobjekten zugeordnet ist, und wobei das Runtime-System dazu ausgelegt ist, aufgrund von Informationen über die Produktionsmaschine eine Auswahl aus der Mehrzahl von Maschinenobjekten zu treffen. Die Informationen können hierbei durch bloßen Anschluss an die Produktionsmaschine durch Auslesen entsprechender Identiflkationsinformationen gewonnen sein oder auch von einem Benutzer eingegebene Informationen sein.

Das Runtimesystem kann ein herkömmliches Runtimesystem sein, das entsprechend zur Verwendung der erfindungsgemäßen Projekte programmiert ist. Die Erfindung umfasst daher auch ein entsprechendes Computerprogrammprodukt.

Die Erfindung wird nun nachfolgend unter Bezug auf die Zeichnung näher beschrieben, wobei
- FIG 1: schematisch ein Projekt veranschaulicht, wie es von einem erfindungsgemäßen Engineeringssystem erstellt wird, und
- FIG 2: schematisch das Projekt aus FIG 1 zeigt, wie es in einem erfindungsgemäße Runtimesystem verwendet wird.

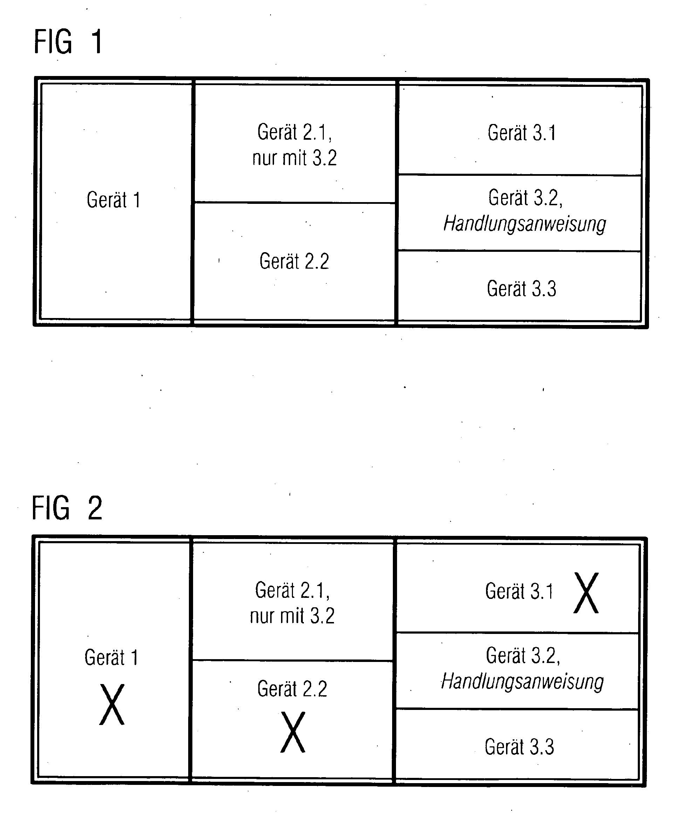

In einem Engineering-System ist es möglich, ein Projekt zu bilden, welches in FIG 1 veranschaulicht ist und dort mit einer doppelten Berandung dargestellt ist. Das Projekt ist nichts anderes als eine Geräte- und Baugruppenanordnung, wobei die Geräte und Baugruppen durch entsprechende Maschinenobjekte repräsentiert werden. Die Anordnung besteht naturgemäß aus verschiedenen Anordnungsorten, die in der FIG 1 durch einen dicken Strich voneinander getrennt sind. Dem ersten Anordnungsort ist nur das Maschinenobjekt für das Gerät 1 zugeordnet. Dem zweiten Anordnungsort sind zwei unterschiedliche Maschinenobjekte zugeordnet, nämlich für das Gerät 2.1 und für das Gerät 2.2. Schließlich sind dem dritten Anordnungsort Maschinenobjekte für drei unterschiedliche Geräte, die Geräte 3.1, 3.2 und 3.3 zugeordnet.

Das Projekt unterscheidet sich von Projekten des Standes der Technik dadurch, dass zwei Anordnungsorten eine Mehrzahl von Maschinenobjekten zugeordnet ist. Bei Projekten gemäß dem Stand der Technik sieht jeder Anordnungsort aus wie der Anordnungsort 1, d.h. ihm ist nur ein einziges Gerät zugeordnet.

Dem Maschinenobjekt für das Gerät 2.1 ist hierbei ein Attribut zugeordnet. Die Worte "nur mit 3.2" bedeuten, dass das Gerät 2.1 in einer realen Produktionsmaschine nur dann verwendet werden darf, wenn gleichzeitig das Gerät 3.2 verwendet wird. Die Auswahl ist dadurch eingeschränkt. Während bei Verwendung des Geräts 2.2 eine Auswahl zwischen den drei Geräten 3.1, 3.2 und 3.3 besteht, legt die Auswahl des Geräts 2.1 fest, dass am dritten Anordnungsort keine Auswahl vorgenommen werden kann.

Das Projekt umfasst ferner eine Handlungsanweisung, welche mit dem Maschinenobjekt für das Gerät 3.2 verbunden ist. Die Handlungsanweisung kann Verwendung in einem Runtimesystem finden. Beispielsweise wird die Handlungsanweisung dann benötigt, wenn die Produktionsmaschine erst im Aufbau begriffen ist. Wird ein Aufstellort, der dem dritten Anordnungsort entspricht (ein Steckplatz), vor dem Aufstellort, der dem zweiten Anordnungsort entspricht, belegt, d.h. eines der Geräte 3.1, 3.2 und 3.3, ausgewählt, bevor eine Auswahl zwischen Gerät 2.1 und Gerät 2.2 erfolgt, so könnte gegebenenfalls das Attribut verloren gehen, dass das Gerät 2.1 nur mit dem Gerät 3.2 zu kombinieren ist. Deswegen wird bei Auswahl eines der Geräte 3.1, 3.2 und 3.3 bereits darauf geachtet, dass bei der nachfolgenden Auswahl das Gerät 2.1 nur dann ausgewählt werden kann, wenn zuvor das Gerät 3.2 ausgewählt worden ist. Der Begriff "Handlungsanweisung" steht hierbei für eine Vielzahl von Möglichkeiten. Beispielsweise können Fehlermeldungen beim falschen Stecken von Geräten an den Steckplätzen vorgesehen sein und unterstützende Anweisungen an das Personal, welches die Produktionsmaschine zusammenbaut, gegeben werden.

Auch die Attribute können vielgestaltiger sein als es in FIG 1 lediglich schematisch veranschaulicht ist. Beispielsweise können bestimmte Geräte als einer Grundausführungsform zugehörig charakterisiert sein und andere Geräte als fakultativ. Beispielsweise könnte ein Attribut für die Maschinenobjekte für Gerät 1, Gerät 2.1 und Gerät 2.2 sein, dass diese einer Grundausführungsform angehören, während ein Attribut für die Geräte 3.1, 3.2 und 3.3 so aussehen könnte, dass diese als zusätzliche Möglichkeit gelten, wobei zusätzlich noch die bereits genannte Einschränkung gilt, dass das Gerät 3.2 zwingend ausgewählt werden muss, wenn das Gerät 2.1 ausgewählt wird, sofern überhaupt ein Gerät aus den Geräten 3.1, 3.2 und 3.3 ausgewählt wird.

FIG 2 veranschaulicht nun, was das Runtimesystem (Steuerungssystem) aus dem Projekt macht. Das Steuerungssystem dient ja zum Steuern einer bestimmten modular aufgebauten Produktionsmaschine. Naturgemäß kann diese nicht sämtliche Varianten abdecken, die das Projekt ermöglicht. So besteht die zu steuernde Produktionsmaschine beispielsweise aus dem Gerät 1, dem Gerät 2.2 und dem Gerät 3.1. Durch die Kreuze in FIG 2 ist veranschaulicht, dass diese Maschinenobjekte nun Gegenstand einer Auswahl geworden sind, die das Steuerungssystem aufgrund der Information über die tatsächliche Produktionsmaschine vornimmt. Das Runtimesystem überprüft hierbei, ob es sich um eine zulässige Auswahl handelt. Da das Gerät 2.1 nicht ausgewählt worden ist, ist es unerheblich, dass das Gerät 3.1 ausgewählt wurde, dies darf nämlich mit dem Gerät 2.2 kombiniert werden und auch mit Gerät 1. Es handelt sich also insgesamt um eine zulässige Auswahl, und das Steuersystem wird eine entsprechende Meldung abgeben und nachfolgend die Produktionsmaschinen mit Hilfe des Projekts ansteuern können.

Die beschriebene Art von Projekt, bei dem einem Anordnungsort eine Mehrzahl von Maschinenobjekten zugeordnet ist, erlaubt es somit, insbesondere alternative Optionen zwischen unterschiedlichen Geräten (und Baugruppen) technisch optimiert zu handhaben. Anders als bei der Verwendung von einer Mehrzahl von Projekten, bei denen jeweils jedem Anordnungsort nur ein Maschinenobjekt zugeordnet ist, welche Alternativen repräsentieren sollen, ist hier eine Pflege der Daten erleichtert. Kommt ein neue Variante des Geräts 2.2 auf den Markt, muss lediglich in dem Projekt nur das Maschinenobjekt für das Gerät 2.2 geändert werden, und nicht in einer Vielzahl von Projekten. Dadurch, dass aber (siehe FIG 2) das Runtimesystem eine Auswahl aus den Maschinenobjekten trifft, ist das erfindungsgemäße Projekt in seiner Verwendung ökonomisch, was Speicherplätze und Transfers über Datenbusse betrifft.

Die Art des erfindungsgemäßen Projekts erlaubt eine Vielzahl von Möglichkeiten, was die Unterschiede zwischen den Geräten 2.1 und 2.2 bzw. 3.1, 3.2 und 3.3 betrifft.

Beispielsweise kann es sich um einander ersetzende Objekte handeln, die dieselbe maschinenlesbare Fabrikatebezeichnung (MLFB) aufweisen. Die Verwandtschaft kann auch noch geringer sein, es kann sich um die gleiche Klasse von Geräten (z. B. um Leistungsteile, Regelungsteile etc. ganz generell gesehen) handeln. Schließlich kann auch lediglich das Steuerschema dasselbe sein, beispielsweise bei mechatronischen Objekten. Die Verwandtschaft kann jedoch auch noch enger gestaltet sein, beispielsweise kann gefordert sein, dass die Sollstromstärken bei Leistungsteilen gleich sein sollen etc.

Für den Ersatz von Objekten können bestimmte Regeln gelten, welche auch in den oben genannten Attributen niedergelegt sein können. Beispielsweise kann es möglich sein, dass manche Geräte (z. B. das Gerät 3.2) lediglich temporär die verwandten Geräte 3.1 und 3.2 ersetzen dürften, und zwar im Fall, dass die Produktionsmaschine einer Wartung unterliegt. Es kann auch der Kreuztausch von verwandten Komponenten zugelassen sein, beispielsweise zwischen Gerät 2.1 und Gerät 3.2. Es gibt viele Möglichkeiten, wie einander ersetzende Objekte im Rahmen der Erfindung ins Spiel kommen. Wesentlich ist, dass das Projekt die Ersetzung der Objekte bereits vorsieht, so wie es die vorliegende Erfindung ermöglicht.

## Patentansprüche

1. Verfahren zum Ansteuern einer modular aus Geräten und Baugruppen bestehenden Produktionsmaschine,
bei dem in einem Engineering-System eine Geräte- und Baugruppenanordnung festgelegt wird, welche ein Projekt bildet, und wobei in dem Projekt bestimmten Anordnungsorten zumindest ein Maschinenobjekt mit Steuerungsinformationen für jeweils ein Gerät oder eine Baugruppe zugeordnet wird, und
wobei das Gerät einer Steuerung zugeführt wird, die aufgrund der Maschinenobjekte eine dem Projekt mit den Maschinenobjekten entsprechende Produktionsmaschine ansteuern kann,
**dadurch gekennzeichnet,**
**dass** in dem Engineeringssystem an zumindest einem Anordnungsort in dem Projekt mehrere unterschiedliche Maschinenobjekte (Gerät 2.1, Gerät 2.2; Gerät 3.1, Gerät 3.2, Gerät 3.3) zugeordnet werden,
so dass die Steuerung mit Hilfe des Projekts Produktionsmaschinen ansteuern kann, in denen an einem diesem Anordnungsort entsprechenden Aufstellungsort wahlweise ein/eine einem der unterschiedlichen Maschinenobjekte entsprechendes/entsprechende Gerät/Baugruppe verwendet ist.

2. Verfahren nach Anspruch 1, **dadurch gekennzeichnet, dass** den Maschinenobjekten zumindest ein Anordnungsortattribut zugeordnet ist, welches die Rolle der Maschinenobjekte in dem Projekt widerspiegelt oder die Beziehung der zugeordneten Geräte und Baugruppen zu Geräten und Baugruppen an einem anderen Anordnungsort widerspiegelt.

3. Verfahren nach Anspruch 1 oder 2, **dadurch gekennzeichnet, dass** Handlungsanweisungen, die von der Steuerung ausgebbar sind, in dem Projekt gespeichert sind.

4. Verfahren nach einem der vorhergehenden Ansprüche, **dadurch gekennzeichnet, dass** die Steuerung bei Anschluss an eine Produktionsmaschine überprüft, ob die Geräte und Baugruppen der Produktionsmaschine in ihrer Gesamtheit mit Hilfe des Projekts ansteuerbar sind.

5. Engineering-System zum Bilden eines Projekts für die Ansteuerung einer modular aus Geräten und Baugruppen bestehenden Produktionsmaschine,
wobei das Projekt als Geräte- und Baugruppenanordnung gebildet ist, an deren Anordnungsorten zumindest ein Maschinenobjekt mit Steuerungsinformationen für jeweils ein Gerät oder Baugruppe zugeordnet wird,
**dadurch gekennzeichnet, dass** zumindest einem Anordnungsort eine Mehrzahl von Maschinenobjekten zugeordnet ist.

6. Runtimesystem, das aus einem Projekt Steuerbefehle für die Ansteuerung für die modular aus Geräten und Baugruppen bestehenden Produktionsmaschine gewinnt,
**dadurch gekennzeichnet,**
**dass** das Runtime-System zur Verwendung von Projekten ausgelegt ist, die als Geräte- und Baugruppenanordnung definiert sind, wobei zumindest einem Anordnungsort eine Mehrzahl von Maschinenobjekten zugeordnet ist, wobei das Runtimesystem dazu ausgelegt ist, aufgrund von Informationen über die Produktionsmaschine eine Auswahl aus der Mehrzahl von Maschinenobjekten zu treffen.

## Claims

1. Method for controlling a modular production machine consisting of appliances and components,
in which an appliance and component arrangement is defined in a engineering system which forms a project, and with specific arrangement locations being assigned in the project at least one machine object with control system information for an appliance or a component in each case, and
with the appliance being directed to a control system which, as a result of the machine object, can activate the production machine corresponding to the project with the machine objects, **characterised in that,**
in the engineering system at at least one arrangement location in the project a number of different machine objects (appliance 2.1, appliance 2.2; appliance 3.1, appliance 3.2, appliance 3.3) are assigned,
so that the control system can activate production machines with the aid of the project, in which at a site corresponding to this arrangement location optionally an appliance/a component corresponding to this setup location is used.

2. Method according to claim 1, **characterised in that** the machine object is assigned at least one arrangement location attribute which reflects the role of the machine object in the project or the relationship of the assigned appliance and component to appliances and components at another arrangement location.

3. Method according to claim 1 or 2, **characterised in that** instructions which can be output by the control system are stored in the project.

4. Method according to one of the previous claims, **characterised in that** the control system checks on connection to a production machine whether the appliances and components of the production machine are able to be controlled in their entirety with the aid of the project.

5. Engineering system for creating a project for the activation of a modular production machine consisting of appliances and components,
with the project being embodied as an arrangement of appliances and components, at the arrangement locations of which at least one machine object with control information for an appliance or a component is assigned in each case, **characterised in that** at least one arrangement location is assigned a plurality of machine objects.

6. Runtime system which obtains control commands from a project for the activation for the modular production machine consisting of appliances and components,
**characterised in that**
the runtime system is designed for the use of projects which are defined as an arrangement of appliances and components, with at least one arrangement location being assigned a plurality of machine objects, with the runtime system being designed to make a choice from the plurality of machine objects based on information about the production machine.

## Revendications

1. Procédé de commande d'une machine de production composée de manière modulaire d'appareils et de modules,
dans lequel on fixe dans un système d'ingénierie un agencement d'appareils et de modules qui forme un projet et dans lequel on associe à des lieux d'implantation déterminés dans le projet au moins un objet de machines ayant des informations de commande, pour respectivement un appareil ou un module, et dans lequel on envoie à l'appareil une commande qui, sur la base des objets machines, peut commander une machine de production correspondant au projet ayant les objets machines, **caractérisé**
**en ce que** dans le système d'ingénierie, on associe, en au moins un lieu d'implantation dans le projet, plusieurs objets machines différents ( appareil 2.1, appareil 2.2, appareil 3.1, appareil 3.2, appareil 3.3 ),
de manière à ce que la commande puisse commander, à l'aide du projet, des machines de production, dans lesquelles on utilise, en un emplacement correspondant à ce lieu d'implantation, au choix, un appareil/module correspondant à l'un des objets machines différents.

2. Procédé suivant la revendication 1, **caractérisé en ce que** l'on associe aux objets machines au moins un attribut de lieu d'implantation, qui reflète le rôle des objets machines dans le projet ou qui reflète la relation des appareils et modules associés aux appareils et modules en un autre lieu d'implantation.

3. Procédé suivant la revendication 1 ou 2, **caractérisé en ce que** l'on mémorise, dans le projet, les indications de manoeuvre qui peuvent être émises par la commande.

4. Procédé suivant l'une des revendications précédentes, **caractérisé en ce que** la commande contrôle, lors d'un raccordement à une machine de production, si les appareils et les modules de la machine de production peuvent être commandés dans leur ensemble à l'aide du projet.

5. Système d'ingénierie pour former un projet de commande d'une machine de production composée de manière modulaire d'appareils et de modules,
dans lequel le projet est formé sous la forme d'un agencement d'appareils et de modules aux lieux d'implantation desquels est associé au moins un objet machine ayant des informations de commande de respectivement un appareil ou un module, **caractérisé en ce qu'**une multiplicité d'objets machines est associée à au moins un lieu d'implantation.

6. Système de temps de fonctionnement, qui extrait d'un projet des instructions de commande de machines de production composées de façon modulaire d'appareils et de modules,
**caractérisé**
**en ce que** le système de temps de fonctionnement est conçu pour l'utilisation de projets, qui sont définis sous la forme d'agencement d'appareils et de modules, une multiplicité d'objets machines étant associée à au moins un lieu d'implantation, le système de temps d'exploitation étant conçu pour, sur la base d'informations sur la machine de production, choisir dans la multiplicité d'objets machines.
